# FASCICULE DE BREVET EUROPEEN

(11) **EP 3 384 363 B1**
(45) Date de publication et mention de la délivrance du brevet: **11.12.2019**
(21) Numéro de dépôt: 16805089.6
(22) Date de dépôt: 30.11.2016
(51) Int. Cl.: G05D 16/20

(54) **SYSTÈME DE CONTRÔLE DE PRESSION D'UNE ENCEINTE ÉTANCHE**
SYSTEM ZUR STEUERUNG DER DRUCKS EINES VERSIEGELTEN GEHÄUSES
SYSTEM FOR CONTROLLING THE PRESSURE OF A SEALED ENCLOSURE

(30) Priorité: 02.12.2015 FR 1561725
(43) Date de publication de la demande: 10.10.2018
(73) Titulaire: Commissariat à l'énergie atomique et aux énergies alternatives, 75015 Paris (FR)
(72) Inventeur: PARRENIN, Cédric, 21120 Til-Chatel (FR)
(74) Mandataire: Brevalex
(86) Numéro de dépôt international: PCT/EP2016/079322
(87) Numéro de publication internationale: WO 2017/093344

(56) Documents cités:
- EP-A1- 0 091 759
- WO-A1-01/17855
- CN-U- 204 557 172
- Grinnell ET AL: "Tritium Glovebox Stripper System Seismic Design Evaluation", , 1 septembre 2015 (2015-09-01), XP055301144, Extrait de l'Internet: URL:http://sti.srs.gov/fulltext/SRNL-STI-2 015-00453.pdf [extrait le 2016-09-08]

## Description

### DOMAINE TECHNIQUE

La présente invention concerne le domaine d'enceintes étanches de type boîtes à gants ou enceintes de confinement et plus particulièrement, concerne le contrôle de pression des enceintes étanches et de leur mise en sécurité.

### ÉTAT DE LA TECHNIQUE ANTÉRIEURE

Dans de nombreux domaines industriels, on utilise souvent des enceintes étanches (i.e., boîtes à gants ou enceintes de confinement) pour confiner ou manipuler des matières dangereuses.

Plus particulièrement, l'enceinte étanche assure le confinement statique de la matière dangereuse dans un périmètre totalement clos et étanche. En outre, un système de régulation de pression couplé à l'enceinte étanche assure un confinement dynamique par la création d'un gradient de pression entre la matière dangereuse contenue dans l'enceinte et l'ambiance locale. Le document WO 01/17855 décrit un système pour maintenir une enceinte étanche dans un environnement gazeux adapté pour la conservation des produits périssables. Ce système comporte un circuit pour contrôler l'évacuation ou l'admission du gaz dans l'enceinte étanche.

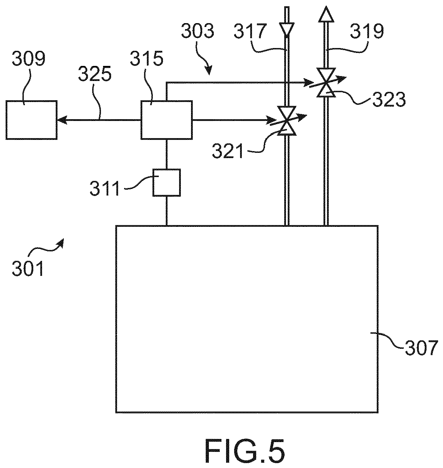

La Fig. 5 illustre de manière schématique un système de régulation 301 d'une enceinte étanche 307, selon l'art antérieur.

Le système de régulation 301 est destiné à maintenir l'enceinte étanche 307 à un niveau de dépression appartenant à un intervalle opérationnel compris entre environ - 50 daPa et -30 daPa tout en la balayant par un gaz neutre ou de l'air.

Plus particulièrement, le système de régulation comporte un circuit de pilotage 303 comprenant un capteur de pression 311, une électrovanne de soufflage 321, une électrovanne d'extraction 323, et un automate de pilotage 315.

Le capteur de pression est destiné à mesurer la pression de l'enceinte étanche.

Les électrovannes de soufflage 321 et d'extraction 323 sont respectivement connectées à des lignes fluidiques de soufflage 317 et d'extraction 319 d'un gaz neutre ou de l'air. L'électrovanne de soufflage 321 est destinée à réguler le soufflage du gaz neutre ou de l'air en légère pression (environ 400 millibar) dans l'enceinte étanche 307. L'électrovanne d'extraction 323 est destinée à réguler l'extraction du gaz ou de l'air depuis l'enceinte étanche 307.

Par ailleurs, l'automate de pilotage 315 est destiné à piloter les électrovannes de soufflage 321 et d'extraction 323 en fonction de la valeur de pression mesurée afin que la valeur de cette pression reste comprise dans l'intervalle opérationnel. En effet, lorsque le seuil de dépression de la borne inférieure (i.e. -50 daPa) de l'intervalle opérationnel est atteint, l'électrovanne d'extraction 323 se ferme et l'électrovanne de soufflage 321 s'ouvre sur consigne de l'automate 315. Lorsque le seuil de dépression de la borne supérieure (i.e. - 30 daPa) de l'intervalle opérationnel est atteint, l'électrovanne d'extraction 323 s'ouvre et l'électrovanne de soufflage 321 se ferme sur consigne de l'automate.

En outre, au cas où la valeur de pression de l'enceinte 307 atteint l'une ou l'autre des bornes primaires d'un intervalle de dégradation compris entre environ -70 daPa et - 20 daPa, les électrovannes de soufflage 321 et d'extraction 323 se ferment sur consigne de l'automate 315 et un signal d'alerte 325 est reporté à un centre de surveillance 309 ou de télésurveillance.

Toutefois, dans le cas d'une défaillance unique ou combinée de certains éléments critiques parmi par exemple le capteur de pression et les électrovannes de soufflage et d'extraction, l'enceinte étanche peut se retrouver en dehors d'une plage de dépression admissible pendant un laps de temps plus ou moins long. En effet, un certain temps est nécessaire entre la réception du signal d'alerte et l'intervention d'un opérateur de maintenance. En particulier, si le capteur de pression est défaillant, il peut transmettre des valeurs erronées à l'automate qui à son tour, génère des séquences erronées de pilotage d'électrovannes pouvant mettre l'enceinte étanche en sur-pression ou en sur-dépression. Si l'électrovanne d'extraction reste ouverte, la dépression peut augmenter de manière incontrôlée et si l'électrovanne de soufflage reste bloquée, la pression peut augmenter de manière incontrôlée.

En outre, dans le cas où l'automate lui-même est en panne lors d'un mode dégradé, le report du signal d'alerte ne sera pas réalisé et dans ce cas, l'enceinte étanche peut rester en dehors de la plage de dépression admissible sur une longue période de temps sans que le centre de surveillance soit informé.

Ainsi, l'objet de la présente invention est de remédier aux inconvénients précités en proposant un système de contrôle de pression d'une enceinte étanche capable de sécuriser automatiquement l'enceinte étanche tout en fiabilisant la transmission du signal d'alerte.

### EXPOSÉ DE L'INVENTION

L'invention a pour objet un système de contrôle de pression d'une enceinte étanche de type boîte à gant ou enceinte de confinement, comprenant un circuit primaire de pilotage configuré pour maintenir une valeur courante de pression de l'enceinte étanche dans un intervalle de pression opérationnel, ledit circuit primaire de pilotage étant en outre configuré pour isoler l'enceinte étanche et pour transmettre un signal d'alerte primaire au cas où la valeur courante de pression atteint l'une ou l'autre des bornes primaires d'un intervalle de dégradation, ledit système comportant en outre un circuit secondaire de mise en sécurité indépendant et dissemblable dudit circuit primaire, ledit circuit secondaire de mise en sécurité étant configuré pour isoler l'enceinte étanche et pour transmettre un signal d'alerte secondaire lorsque la pression de l'enceinte étanche atteint l'une ou l'autre des bornes secondaires d'un intervalle d'alarme.

Ceci permet de fiabiliser à la fois la mise en sécurité automatique de l'enceinte étanche et la transmission en temps réel d'une alerte à un centre de surveillance.

Avantageusement, le circuit primaire de pilotage est un circuit de logique programmé et le circuit secondaire de mise en sécurité est un circuit de logique câblée. Ces deux circuits correspondent ainsi à deux voies parallèles et indépendantes et en particulier, le circuit de logique câblée est simple, très robuste et très fiable.

Selon un mode de réalisation de la présente invention, ledit circuit primaire de pilotage comporte :
- un module primaire de mesure configuré pour mesurer une première valeur courante de pression de l'enceinte étanche,
- un module primaire de vannes de réglage, et
- un automate de pilotage configuré pour piloter le module primaire de réglage afin que ladite première valeur courante de pression reste comprise dans l'intervalle opérationnel, ledit automate de pilotage étant en outre configuré pour commander l'isolement de l'enceinte étanche et pour transmettre ledit signal d'alerte primaire au cas où ladite première valeur courante de pression atteint l'une ou l'autre des bornes primaires de l'intervalle de dégradation, et
ledit circuit secondaire de mise en sécurité comporte :
- un module secondaire de mesure configuré pour mesurer une seconde valeur courante de pression de l'enceinte étanche et pour déclencher un signal de mise en sécurité lorsque ladite seconde valeur de pression atteint l'une ou l'autre des bornes secondaires de l'intervalle d'alarme,
- un module secondaire de vannes de sécurité, et
- un module de sécurité configuré pour transmettre ledit signal de mise en sécurité d'une part au module secondaire de vannes pour isoler l'enceinte étanche et d'autre part à un centre de surveillance, ledit signal de mise en sécurité correspondant audit signal d'alerte secondaire.

Ainsi, les deux circuits comportent des éléments simples, indépendants et réalisés selon des technologies différentes.

Avantageusement, le module secondaire de mesure comporte :
- un premier pressostat configuré pour déclencher le signal de mise en sécurité lorsque ladite seconde valeur courante de pression atteint une première borne secondaire de l'intervalle d'alarmes, et
- un second pressostat configuré pour déclencher le signal de mise en sécurité lorsque ladite seconde valeur courante de pression atteint une seconde borne secondaire de l'intervalle d'alarmes.

Ainsi, en allouant un pressostat distinct pour chaque seuil d'alarme, on augmente encore davantage la fiabilité du système de contrôle.

Avantageusement, le module de sécurité est un relais de sécurité configuré pour relayer le signal de mise en sécurité déclenché par l'un ou l'autre des premier et second pressostats d'une part au module secondaire de vannes de sécurité afin d'isoler l'enceinte étanche et d'autre part au centre de surveillance.

Le relais de sécurité est un composant très simple, très fiable et très robuste.

Avantageusement, le module primaire de vannes de régulation comporte une vanne primaire d'extraction destinée à être reliée à une ligne fluidique d'extraction et une vanne primaire de soufflage destinée à être reliée à une ligne fluidique de soufflage, et le module secondaire de vannes de sécurité comporte une vanne secondaire d'extraction destinée à être reliée en série avec la vanne primaire d'extraction, et une vanne secondaire de soufflage destinée à être reliée en série avec la vanne primaire de soufflage.

Avantageusement, le module secondaire de vannes de sécurité comporte en outre une vanne spécifique d'arrivée de gaz ou de vide destinée à être reliée à une ligne fluidique annexe d'arrivée de gaz ou de vide.

Ainsi, on peut contrôler l'arrivée d'un gaz ou du vide relative à un procédé spécifique destiné à être mis en œuvre dans l'enceinte étanche.

Avantageusement, chacune des vannes primaires d'extraction et de soufflage comporte une ligne fluidique de dérivation permettant en cas de panne, de court-circuiter l'une ou l'autre desdites vannes primaires.

Ceci permet de faciliter la remise en dépression de l'enceinte étanche en cas de panne d'un élément du module primaire de vannes de réglage.

Avantageusement, le système comporte des vannes manuelles en amont et en aval de chacune des vannes primaires et secondaires d'extraction et de soufflage.

Les vannes manuelles amont et aval permettent de faciliter le remplacement d'éléments défaillants en maintenant le gradient de pression dans l'enceinte étanche.

Avantageusement, le système comporte une clarinette de mesure comprenant les modules primaire et secondaire de mesure ainsi qu'une prise de pression de test d'étanchéité et une connexion double obturation.

La prise de pression de test permet de brancher directement un appareil de mesure d'étanchéité. La connexion double obturation permet de désaccoupler les modules de mesure pour des actions de maintenance.

Avantageusement, les bornes primaires de l'intervalle de dégradation sont contenues dans l'intervalle d'alarme.

Ceci permet d'éviter des problèmes d'interférences entre les deux circuits primaire et secondaire. De plus, dans le cadre des essais périodiques, on peut facilement discriminer les éléments des deux circuits pour détecter les éléments défectueux.

Avantageusement, les bornes primaires sont d'environ -20daPa et -70daPa, et les bornes secondaires sont d'environ -10daPa et -80daPa.

Avantageusement, le système comporte une soupape hydraulique de sécurité ultime.

L'invention vise également une enceinte étanche comprenant le système de contrôle selon l'une quelconque des caractéristiques précédentes. L'enceinte étanche peut être une boîte à gants ou une enceinte de confinement.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La Fig. 1 illustre très schématiquement un système de contrôle de pression d'une enceinte étanche, selon l'invention ;
La Fig. 2 illustre très schématiquement un système de contrôle de pression d'une enceinte étanche, selon un mode de réalisation de l'invention ;
La Fig. 3 est un organigramme illustrant très schématiquement un procédé de contrôle de pression d'une enceinte étanche, selon un mode de réalisation de l'invention ;
La Fig. 4 illustre très schématiquement un système de contrôle de pression d'une enceinte étanche, selon un mode de réalisation préféré de l'invention ; et
La Fig. 5 illustre de manière schématique un système de régulation d'une enceinte étanche, selon l'art antérieur.

### EXPOSÉ DÉTAILLÉ D'UN MODE DE RÉALISATION PRÉFÉRÉ

Le principe de l'invention consiste à utiliser deux circuits parallèles, indépendants et dissemblables pour fiabiliser la mise en sécurité automatique d'une enceinte étanche lorsque la pression de cette dernière se trouve en dehors d'une plage de dépression admissible. On notera que l'enceinte étanche peut être une boîte à gants ou une enceinte de confinement.

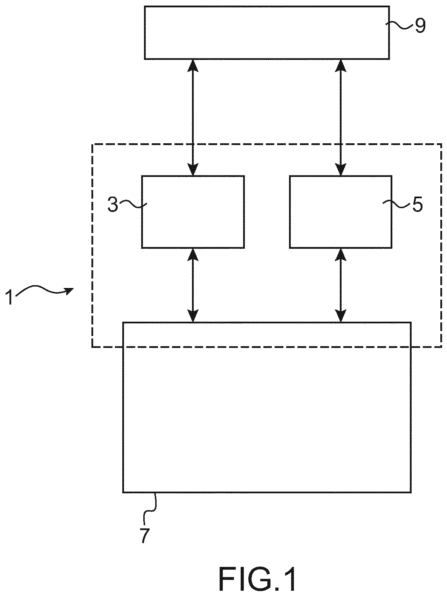

La Fig. 1 illustre très schématiquement un système de contrôle de pression d'une enceinte étanche, selon l'invention.

Conformément à l'invention, le système de contrôle 1 comporte un circuit primaire 3 de pilotage et un circuit secondaire 5 de mise en sécurité indépendant et dissemblable du circuit primaire 3.

Le circuit primaire 3 de pilotage est configuré pour automatiquement maintenir la pression de l'enceinte étanche 7 à un niveau de dépression opérationnel. Autrement dit, à chaque instant la valeur courante de pression de l'enceinte étanche 7 est maintenue par le circuit primaire 3 de pilotage dans un intervalle de pression opérationnel habituellement entre -50 daPa et -30 daPa.

En outre, au cas où la valeur courante de pression atteint, à cause d'une défaillance, l'une ou l'autre des bornes primaires d'un intervalle de dégradation (i.e. une valeur en dehors de l'intervalle opérationnel), le circuit primaire 3 de pilotage est configuré pour isoler l'enceinte étanche 7 et pour transmettre un signal d'alerte primaire à un centre de surveillance 9.

Toutefois, lorsque la pression de l'enceinte étanche 7 atteint, à cause par exemple d'une défaillance du circuit primaire 3, une valeur en dehors de l'intervalle opérationnel, le circuit secondaire 5 de mise en sécurité entre en action pour sécuriser l'enceinte étanche 7.

Plus particulièrement, lorsque la pression de l'enceinte étanche 7 atteint l'une ou l'autre des bornes secondaires d'un intervalle d'alarme, le circuit secondaire 5 de mise en sécurité est configuré pour isoler l'enceinte étanche 7 et pour transmettre un signal d'alerte secondaire au centre de surveillance 9.

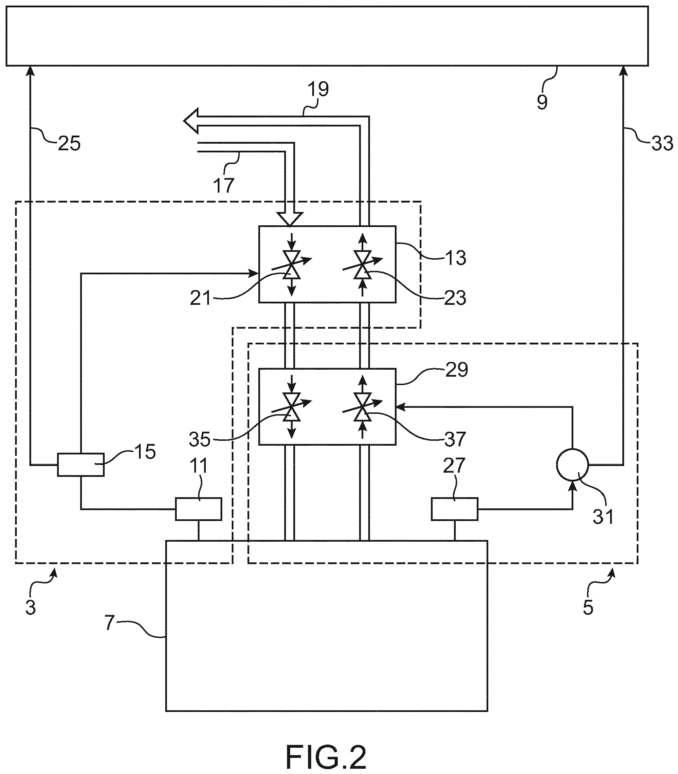

La Fig. 2 illustre très schématiquement un système de contrôle de pression d'une enceinte étanche, selon un mode de réalisation de l'invention.

Le système de contrôle 1 comporte un circuit primaire 3 de pilotage et un circuit secondaire 5 de mise en sécurité.

Le circuit primaire 3 de pilotage comporte un module primaire de mesure 11, un module primaire de vannes de réglage 13 et un automate de pilotage 15.

Le module primaire de mesure 11 est configuré pour mesurer une première valeur courante de pression de l'enceinte étanche 7 (i.e. mesurer à chaque instant courant la pression à l'intérieur de l'enceinte étanche). Avantageusement, l'acquisition des mesures de pression est réalisée par des moyens électroniques.

Le module primaire de vannes de réglage 13 est connecté à des lignes fluidiques de soufflage 17 et d'extraction 19 d'un gaz neutre ou de l'air. Il est configuré pour réguler le soufflage et/ou l'extraction du gaz neutre ou de l'air en légère pression (environ 400 millibar) dans ou depuis l'enceinte étanche 7. Avantageusement, le module primaire de vannes de réglage 13 comporte des vannes de soufflage 21 et d'extraction 23 de type électropneumatique facilement pilotables par l'automate de pilotage 15.

L'automate de pilotage 15 est relié de manière filaire ou non filaire d'une part au module primaire de mesure 11 et d'autre part au module primaire de vannes de réglage 13. Il reçoit des signaux de mesure depuis le module primaire de mesure 11 et transmet des signaux de commande au module primaire de réglage 13.

Plus particulièrement, l'automate de pilotage 15 est configuré pour piloter le module primaire de réglage 13 en fonction de la première valeur courante de pression acquise par le module primaire de mesure 11 afin que cette valeur de pression reste comprise dans un intervalle opérationnel de dépression correspondant à un fonctionnement normal de l'enceinte étanche. L'intervalle opérationnel est limité par des bornes inférieure et supérieur de dépression d'environ -50 daPa et -30 daPa. Ainsi, grâce à l'automate de pilotage, la pression de l'enceinte étanche 7 est automatiquement maintenue à un niveau de dépression opérationnel.

Au cas où la pression de l'enceinte étanche 7 atteint (à cause d'une défaillance) une valeur de dépression en dehors de l'intervalle opérationnel, l'automate de pilotage 15 fonctionne alors selon un mode dégradé dans lequel l'enceinte étanche 7 est isolée et l'anomalie est signalée.

En effet, au cas où la première valeur de pression de l'enceinte étanche 7 atteint l'une ou l'autre des bornes primaires d'un intervalle de dégradation compris par exemple entre environ -70 daPa et -20 daPa, l'automate de pilotage 15 est configuré pour commander via le module primaire de vannes de réglage 13 l'isolement de l'enceinte étanche 7. Autrement dit, sur consigne de l'automate de pilotage 15, le module primaire de réglage 13 se ferme pour isoler l'enceinte étanche 7. De plus, dans ce même mode dégradé, l'automate de pilotage 15 est configuré pour transmettre un signal d'alerte primaire 25 au centre de surveillance 9 (ou de télésurveillance).

Au cas où la pression de l'enceinte étanche 7 atteint l'une ou l'autre des bornes secondaires d'un intervalle d'alarme (i.e. une valeur en dehors de l'intervalle de dégradation), le circuit secondaire 5 de mise en sécurité qui est indépendant et dissemblable du circuit primaire 3 entre automatiquement en action pour sécuriser l'enceinte étanche 7.

Plus particulièrement, le circuit secondaire 5 de mise en sécurité comporte un module secondaire de mesure 27, un module secondaire de vannes de sécurité 29, et un module de sécurité 31. Le module de sécurité 31 est relié de manière filaire d'une part au module secondaire de mesure 27 et d'autre part au module secondaire de vannes de sécurité 29. Il reçoit des signaux depuis le module secondaire de mesure 27 et les transmet au module secondaire de vannes de sécurité 29.

Le module secondaire de mesure 27 est configuré pour mesurer à chaque instant courant une seconde valeur courante de pression de l'enceinte étanche 7 et pour déclencher un signal de mise en sécurité lorsque cette seconde valeur de pression atteint l'une ou l'autre des bornes secondaires de l'intervalle d'alarmes. On notera que la mesure de pression réalisée par le module secondaire de mesure 27 est complétement indépendante de celle réalisée par le module primaire de mesure 11. Bien entendu, à chaque même instant, la seconde valeur courante de pression est sensiblement égale à la première valeur courante de pression pour des modules primaire 11 et secondaire 27 de mesure fonctionnant normalement.

Par ailleurs, le module secondaire de vannes de sécurité 29 est connecté aux lignes fluidiques de soufflage 17 et d'extraction 19 via le module primaire de vannes de réglage 13. Plus précisément, le module secondaire de vannes de sécurité 29 est connecté en série par des canaux fluidiques avec le module primaire de vannes de réglage 13 et est disposé au plus près de l'enceinte étanche 7. Avantageusement, le module secondaire de vannes de sécurité 29 comporte des vannes de soufflage 35 et d'extraction 37 de type électropneumatique facilement activables par le module de sécurité 31.

Au cas où la pression de l'enceinte étanche 7 atteint, (à cause par exemple d'une défaillance dans le circuit primaire 3 de pilotage), une valeur de pression en dehors de l'intervalle de dégradation, le module de sécurité 31 est configuré pour automatiquement et en temps réel isoler l'enceinte étanche 7 et transmettre une alerte.

Plus particulièrement, au cas où la seconde valeur courante de pression de l'enceinte étanche 7 atteint l'une ou l'autre des bornes secondaires de l'intervalle d'alarme compris par exemple entre environ -80 daPa et -10 daPa, le module de sécurité 31 est configuré pour transmettre au module secondaire de vannes de sécurité 29 le signal de mise en sécurité déclenché par le module secondaire de mesure 27 activant ainsi l'isolement de l'enceinte étanche 7. Simultanément, le module de sécurité 31 est configuré pour transmettre en temps réel et indépendamment de l'automate de pilotage 15 le signal de mise en sécurité représentatif d'un signal d'alerte secondaire 33 au centre de surveillance (ou télésurveillance) 9.

Avantageusement, les bornes primaires de l'intervalle de dégradation sont contenues dans l'intervalle d'alarme. Autrement dit, les bornes secondaires (-80 daPa et -10 daPa) sont respectivement définies à l'extérieur des bornes primaires (-70 daPa et -20 daPa) de l'intervalle de dégradation. Ainsi, on évite tout problème d'interférence entre les deux circuits primaire 3 et secondaire 5. De plus, dans le cadre des essais périodiques, on peut facilement discriminer les éléments des deux circuits 3 et 5.

Avantageusement, le circuit primaire 3 de pilotage est un circuit filaire ou non filaire de logique programmé tandis que le circuit secondaire 5 de mise en sécurité est un circuit filaire de logique câblée. Le circuit de logique câblée est robuste et extrêmement fiable et fonctionne de manière simple et rapide sous l'action de signaux binaires (i.e. signal de déclenchement ou de non déclenchement) tandis que le circuit programmé nécessite une certaine programmation de l'automate de pilotage 15.

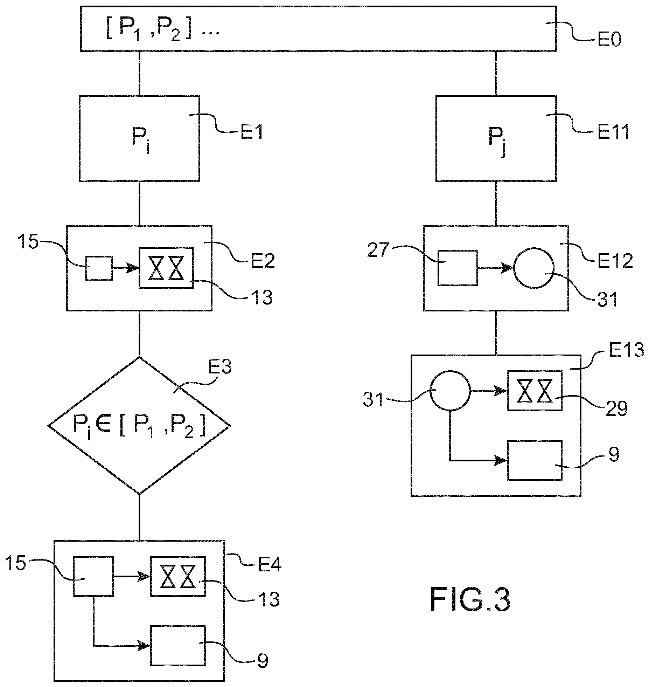

La Fig. 3 est un organigramme illustrant très schématiquement un procédé de contrôle de pression d'une enceinte étanche, selon un mode de réalisation de l'invention.

L'étape E0 est une étape d'initialisation définissant par exemple, l'intervalle opérationnel, l'intervalle de dégradation et l'intervalle d'alarme.

Les étapes E1 à E4 sont mises en œuvre par le circuit primaire tandis que les étapes E11 et E12 sont mises en œuvre en parallèle et de manière indépendante par le circuit secondaire.

Les étapes E1 à E3 forment une boucle et ont la fonction de maintenir l'enceinte étanche de manière automatique à un niveau de dépression opérationnel.

Plus particulièrement, l'étape E1 concerne la mesure de la pression courante Pᵢ de l'enceinte étanche 7 par le module primaire de mesure 11.

A l'étape E2 l'automate de pilotage 15 pilote le module primaire de vannes de réglage 13 en fonction de la valeur courante de pression de l'enceinte étanche 7 pour que la valeur de pression reste constamment comprise dans l'intervalle opérationnel de dépression.

L'étape E3 est un test réalisé par l'automate de pilotage 15 pour vérifier si la valeur courante de pression Pᵢ de l'enceinte étanche 7 est comprise dans l'intervalle opérationnel [P₁, P₂] de dépression. Si oui, on reboucle sur l'étape E1. Sinon (i.e. si la valeur courante de pression atteint une valeur en dehors de l'intervalle opérationnel), on va à l'étape E4.

A l'étape E4, l'automate de pilotage 15 transmet au module primaire de vannes de réglage 13 des consignes de fermeture pour isoler l'enceinte étanche 7. En outre, l'automate de pilotage 15 transmet un signal d'alerte primaire 25 au centre de surveillance 9.

Par ailleurs, l'étape E11 concerne la mesure de la pression courante Pⱼ de l'enceinte étanche 7 par le module secondaire de mesure 27.

A l'étape E12, dès que la valeur courante de pression atteint l'une ou l'autre des bornes secondaires de l'intervalle d'alarmes compris par exemple entre environ -80 daPa et -10 daPa, le module secondaire de mesure 27 déclenche un signal de mise en sécurité destiné au module de sécurité 31.

A l'étape E13, le module de sécurité 31 commute le signal de mise en sécurité à la fois au module secondaire de vannes 29 pour isoler l'enceinte étanche 7 et au centre de surveillance 9.

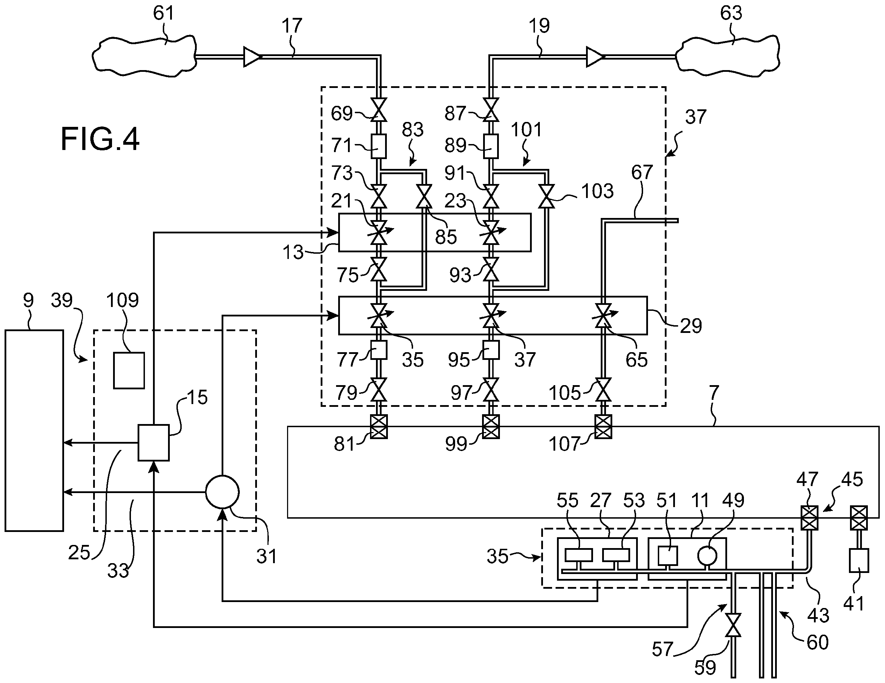

La Fig. 4 illustre très schématiquement un système de contrôle de pression d'une enceinte étanche, selon un mode de réalisation préféré de l'invention.

Le système de contrôle comporte plusieurs organes comprenant une clarinette 35 de mesure, une panoplie 37 de régulation et de mise en sécurité, un coffret 39 de commande et de mise en sécurité, et un pot de garde 41. Chacun de ces organes comporte un ou plusieurs éléments et une partie de tous ces éléments est regroupée en des premier et second groupes indépendants. Le premier groupe d'éléments comporte un module primaire de mesure 11, un module primaire de vannes de réglage 13 et un automate de pilotage 15 couplés entre eux de manière filaire ou non filaire pour former un circuit primaire 3 de pilotage. Le deuxième groupe d'éléments comporte un module secondaire de mesure 27, un module secondaire de vannes de sécurité 29, et un module de sécurité 31 couplés entre eux de manière filaire pour former un circuit secondaire 5 de mise en sécurité indépendant et dissemblable du circuit primaire 3.

Plus particulièrement, la clarinette 35 de mesure comporte les modules primaire 11 et secondaire 27 de mesure disposés sur une conduite reliée via un tuyau souple 43 à une prise de référence 45 de l'enceinte étanche 7. En outre, la prise de référence 45 comprend une double filtration 47.

Le module primaire 11 de mesure comporte un manomètre 49 qui indique la dépression ainsi qu'un capteur de pression 51 électronique (par exemple, un capteur différentiel de pression) qui est configuré pour mesurer la pression dans l'enceinte étanche 7 et pour transmettre chaque valeur courante à l'automate de pilotage 15.

Le module secondaire 27 de mesure comporte des premier 53 et deuxième 55 pressostats de type électromécaniques. Les pressostats 53, 55 sont configurés pour déclencher des signaux de mise en sécurité en temps réel lorsque la valeur courante de pression de l'enceinte étanche 7 atteint des seuils d'alarmes inférieur et supérieur prédéterminés. Le fait de recourir à deux pressostats 53, 55 distincts permet de dissocier les deux seuils d'alarmes et par conséquent, d'augmenter la fiabilité. En variante, les premier 53 et deuxième 55 pressostats peuvent être remplacés par un unique pressostat qui déclenche un signal de mise en sécurité lorsque la valeur de pression atteint l'un ou l'autre des seuils d'alarmes inférieur et supérieur.

Avantageusement, la clarinette 35 de mesure comporte en outre une prise de test d'étanchéité 57. Cette prise 57 comprend une vanne de contrôle d'étanchéité 59 sur laquelle on peut directement brancher un appareil étalonné de mesure d'étanchéité sans la nécessité de débrancher la clarinette 35 de mesure. Ainsi, on peut facilement contrôler par exemple de manière périodique l'étanchéité de l'enceinte 7.

En outre, la clarinette 35 de mesure comporte avantageusement une connexion double obturation 60 (de type STAUBLI) comprenant une prise de pression pour une vanne à débit complémentaire, destinée à facilement désaccoupler et de manière rapide la conduite de la clarinette lors des opérations de maintenance.

Par ailleurs, la panoplie 37 de régulation et de mise en sécurité est connectée d'une part via une ligne fluidique de soufflage 17 à un réseau d'alimentation 61 d'un gaz neutre ou de l'air en basse pression et d'autre part via une ligne fluidique d'extraction 19 à un réseau d'extraction 63 du gaz ou de l'air. Elle comporte le module primaire de vannes de régulation 13 et le module secondaire de vannes de sécurité 29 qui sont configurés pour réguler le soufflage et l'extraction du gaz neutre ou de l'air dans ou depuis l'enceinte étanche 7.

Plus particulièrement, le module primaire de vannes de régulation 13 comporte une vanne primaire d'extraction 23 reliée à la ligne fluidique d'extraction 19 et une vanne primaire de soufflage 21 reliée à la ligne fluidique de soufflage 17. Le module secondaire de vannes de sécurité 29 comporte une vanne secondaire d'extraction 37 reliée en série avec la vanne primaire d'extraction 23, et une vanne secondaire de soufflage 35 reliée en série avec la vanne primaire de soufflage 21. Avantageusement, le module secondaire de vannes de sécurité 29 comporte en outre une vanne spécifique 65 d'arrivée de gaz ou de vide reliée à une ligne fluidique annexe 67 d'arrivée de gaz ou de vide. La ligne fluidique annexe 67 est destinée à la mise en œuvre d'un éventuel procédé spécifique dans un espace clos et spécifique (par exemple, une cloche) à l'intérieur de l'enceinte étanche 7. La vanne spécifique 65 d'arrivée de gaz ou de vide est configurée pour contrôler le niveau du vide dans l'espace clos spécifique de l'enceinte étanche 7.

Selon l'exemple de la Fig. 4, la ligne fluidique de soufflage 17 relie en série plusieurs éléments comportant de manière consécutive à partir d'une extrémité amont relativement au sens de soufflage (i.e. dans le sens d'écoulement fluidique dirigé depuis la source du réseau d'alimentation 61 vers l'enceinte étanche 7) : une première vanne manuelle 69, un premier débitmètre 71 destiné à mesurer le débit du gaz à travers la conduite de la ligne fluidique de soufflage 17, une deuxième vanne manuelle 73, la vanne primaire de soufflage 21 (par exemple, de type électropneumatique), une troisième vanne manuelle 75, la vanne secondaire de soufflage 35 (par exemple, de type électropneumatique), un premier soufflet 77 de dilatation métallique destiné à dissocier la partie relative aux conduits fluidiques de celle relative à l'enceinte étanche 7, et finalement, une quatrième vanne manuelle 79 connectée à l'enceinte étanche 7 via une première double filtration 81 (i.e., un filtre à l'extérieur et à un autre à l'intérieur de l'enceinte étanche 7).

Avantageusement, une portion de la ligne fluidique de soufflage 17 contenant la vanne primaire de soufflage 21 est contournée par une branche fluidique de dérivation 83 comprenant une cinquième vanne manuelle 85 permettant en cas de panne de court-circuiter la vanne primaire de soufflage 21 facilitant ainsi la remise en dépression de l'enceinte étanche 7. Selon cet exemple, la branche de dérivation 83 est connectée entre l'extrémité amont de la deuxième vanne manuelle 73 et l'extrémité aval de la troisième vanne manuelle 75.

On notera que, selon l'architecture de la ligne fluidique de soufflage 17, une vanne manuelle 69, 73, 75, 79 est avantageusement disposée en aval et en amont de chacun des éléments spécifiques composés du premier débitmètre 71, de la vanne primaire de soufflage 21, de la vanne secondaire de soufflage 35 et du premier soufflet 77 de dilatation. Les différentes vannes manuelles 69, 73, 75, 79 permettent d'isoler manuellement l'enceinte étanche 7 en cas d'une anomalie et/ou d'étrangler le réseau de soufflage 61 afin de contrôler le débit du gaz, et/ou de remplacer de manière aisée des éléments défaillants.

La ligne fluidique d'extraction 19 relie en série plusieurs éléments comportant de manière consécutive à partir d'une extrémité aval relativement au sens d'extraction (i.e. dans un sens d'écoulement fluidique émergeant depuis l'enceinte étanche 7) : une sixième vanne manuelle 87, un deuxième débitmètre 89, une septième vanne manuelle 91, la vanne primaire d'extraction 23 (par exemple, de type électropneumatique), une huitième vanne manuelle 93, la vanne secondaire d'extraction 37 (par exemple, de type électropneumatique), un deuxième soufflet 95 de dilatation métallique, et finalement une neuvième vanne manuelle 97 connectée à l'enceinte étanche 7 via une deuxième double filtration 99.

De même, une portion de la ligne fluidique d'extraction 19 contenant la vanne primaire d'extraction 23 est contournée par une branche fluidique de dérivation 101 comprenant une dixième vanne manuelle 103 permettant en cas de panne, de court-circuiter la vanne primaire d'extraction 23. Selon cet exemple, la branche fluidique de dérivation 101 est connectée entre l'extrémité amont de la septième vanne manuelle 91 et l'extrémité aval de la huitième vanne manuelle 93.

On notera également que, selon l'architecture de la ligne fluidique d'extraction 19, une vanne manuelle 87, 91, 93, 97 est avantageusement disposée en aval et en amont de chacun des deuxièmes débitmètres 89, vanne primaire d'extraction 23, vanne secondaire d'extraction 37 et deuxième soufflet 95 de dilatation.

La ligne fluidique annexe 67 d'arrivée de gaz ou de vide comporte la vanne spécifique 65 d'arrivée de gaz ou de vide (par exemple, de type électropneumatique) reliée en série à une onzième vanne manuelle 105 connectée à l'enceinte étanche 7 via une troisième double filtration 107.

Par ailleurs, le coffret de commande 39 et de mise en sécurité comporte l'automate de pilotage 15, le module de sécurité 31 et éventuellement, une interface de commande 109 et d'affichage. L'interface de commande 109 et d'affichage est configurée pour opérer l'enceinte étanche 7. Il est également configuré pour afficher des signaux lumineux et/ou pour émettre des signaux sonores dès que la valeur courante de pression mesurée par le capteur électronique 51 atteint des seuils de dégradation prédéterminés ou dès que l'un ou l'autre des pressostats 53, 55 détecte une pression atteignant un premier ou un deuxième seuil d'alarme prédéterminé.

L'automate de pilotage 15 est configuré pour recevoir la valeur courante de pression depuis le capteur électronique 51 de pression et pour piloter la vanne primaire d'extraction 23 ainsi que la vanne primaire de soufflage 21 en fonction de cette valeur courante. Avantageusement, la valeur courante de pression s'affiche sur l'interface de commande 109 et d'affichage.

Lorsque la valeur courante de pression atteint la borne inférieure (usuellement, - 50 daPa) de l'intervalle opérationnel, l'automate de pilotage 15 commande la fermeture de la vanne primaire d'extraction 23 et l'ouverture de la vanne primaire de soufflage 21.

En revanche, lorsque la valeur courante de pression atteint la borne supérieure (usuellement, -30 daPa) de l'intervalle opérationnel, l'automate de pilotage 15 commande l'ouverture de la vanne primaire d'extraction 23 et la fermeture de la vanne primaire de soufflage 21.

Ainsi, l'automate de pilotage 15 maintien automatiquement l'enceinte étanche 7 à un niveau de dépression opérationnel. On notera que si les vannes manuelles du circuit primaire 3 de pilotage sont bien réglées, la dépression reste stable et par conséquent, les vannes primaires d'extraction 23 et de soufflage 21 se retrouvent peu sollicitées.

Par ailleurs, lorsque la valeur courante de pression de l'enceinte étanche 7 atteint la borne inférieure (usuellement, -70 daPa) ou la borne supérieure (usuellement, -20 daPa) de l'intervalle de dégradation, l'automate de pilotage 15 commande la fermeture des vannes primaires d'extraction 23 et de soufflage 21 afin d'isoler l'enceinte étanche 7 et transmet en outre, un signal d'alerte primaire 25 au centre de surveillance 9 (ou télésurveillance). On notera que le centre de surveillance 9 peut être très éloigné de l'enceinte 7 étanche et en général, il peut être destiné à surveiller une pluralité d'enceintes étanches et éventuellement une pluralité d'autres équipements.

Avantageusement, le signal d'alerte lumineux et/ou sonore s'affiche aussi localement sur l'interface de commande 109.

Par ailleurs, au cas d'un dysfonctionnement du circuit primaire 3 de pilotage et au cas où la valeur courante de pression de l'enceinte étanche 7 atteint une valeur de pression en dehors de l'intervalle de dégradation, le circuit secondaire 5 de mise en sécurité entre alors en action pour sécuriser l'enceinte étanche 7 dans une configuration d'isolement.

Avantageusement, le circuit secondaire 5 est un circuit de logique câblée et le module de sécurité est un relais de sécurité 31 qui permet de relayer les signaux binaires en provenance des pressostats 53, 55 au module secondaire de vannes 29 ainsi qu'au centre de surveillance 9.

En effet, lorsque la valeur courante de pression de l'enceinte étanche 7 atteint la borne inférieure (par exemple, -80 daPa) de l'intervalle d'alarmes, le premier pressostat 53 déclenche un signal de mise en sécurité qui ordonne via le relais de sécurité 31 la fermeture de la vanne secondaire d'extraction 37, de la vanne secondaire de soufflage 35, et de la vanne spécifique 65 d'arrivée de gaz ou de vide. Le signal de mise en sécurité est également relayé de manière fidèle par le relais de sécurité 31 au centre de surveillance 9. Avantageusement, un signal lumineux et/ou sonore de mise en sécurité s'affiche également localement sur l'interface de commande 109.

D'autre part, lorsque la valeur courante de pression de l'enceinte étanche atteint la borne supérieure (par exemple, -10 daPa) de l'intervalle d'alarmes, le deuxième pressostat 55 déclenche un signal de mise en sécurité qui ordonne via le relais de sécurité 31 la fermeture de la vanne secondaire d'extraction 37, de la vanne secondaire de soufflage 35, et de la vanne spécifique 65 d'arrivée de gaz ou de vide. De même, le signal de mise en sécurité est également relayé au centre de surveillance 9. Avantageusement, un signal lumineux et/ou sonore de mise en sécurité s'affiche également localement sur l'interface de commande 109.

En dernier recours, au cas très improbable où les deux circuits primaire 3 et secondaire 5 sont en panne, le pot de garde 41 se déclenche afin de protéger l'enceinte étanche 7 lorsque la pression de l'enceinte 7 dépasse les seuils d'alarme. Le pot de garde 41 comporte de manière connue, une soupape hydraulique de sécurité qui encaisse les surpressions ou sur-dépressions accidentelles afin de faire chuter la pression de l'enceinte étanche 7.

Le système de contrôle de la présente invention permet ainsi de fiabiliser la mise à l'état sûr de l'enceinte étanche de manière automatique et en temps réel. Il permet également de fiabiliser la transmission en temps réel du défaut de pression à un centre de surveillance ou de télésurveillance. En outre, il permet de faciliter la remise en dépression de l'enceinte étanche lorsqu'une vanne de réglage est en panne. Il permet aussi le remplacement d'éléments défaillants en maintenant le gradient de pression de l'enceinte étanche.

## Revendications

1. Système de contrôle de pression d'une enceinte étanche (7) de type boîte à gant ou enceinte de confinement, comprenant un circuit primaire (3) de pilotage configuré pour maintenir une valeur courante de pression de l'enceinte étanche (7) dans un intervalle de pression opérationnel, ledit circuit primaire (3) de pilotage étant en outre configuré pour isoler l'enceinte étanche (7) et pour transmettre un signal d'alerte primaire au cas où la valeur courante de pression atteint l'une ou l'autre des bornes primaires d'un intervalle de dégradation,
**caractérisé en ce que** ledit système comporte en outre un circuit secondaire (5) de mise en sécurité indépendant et dissemblable dudit circuit primaire, ledit circuit secondaire (5) de mise en sécurité étant configuré pour isoler l'enceinte étanche (7) et pour transmettre un signal d'alerte secondaire lorsque la pression de l'enceinte étanche atteint l'une ou l'autre des bornes secondaires d'un intervalle d'alarme.

2. Système selon la revendication 1, **caractérisé en ce que** le circuit primaire (3) de pilotage est un circuit de logique programmé et le circuit secondaire (5) de mise en sécurité est un circuit de logique câblée.

3. Système selon la revendication 1 ou 2, **caractérisé en ce que** ledit circuit primaire (3) de pilotage comporte :
- un module primaire de mesure (11) configuré pour mesurer une première valeur courante de pression de l'enceinte étanche (7),
- un module primaire de vannes de réglage 13, et
- un automate de pilotage (15) configuré pour piloter le module primaire de réglage (23) afin que ladite première valeur courante de pression reste comprise dans l'intervalle opérationnel, ledit automate de pilotage (15) étant en outre configuré pour commander l'isolement de l'enceinte étanche et pour transmettre ledit signal d'alerte primaire (25) à un centre de surveillance (9) au cas où ladite première valeur courante de pression atteint l'une ou l'autre des bornes primaires de l'intervalle de dégradation, et
**en ce que** ledit circuit secondaire (5) de mise en sécurité comporte :
- un module secondaire de mesure (27) configuré pour mesurer une seconde valeur courante de pression de l'enceinte étanche et pour déclencher un signal de mise en sécurité lorsque ladite seconde valeur de pression atteint l'une ou l'autre des bornes secondaires de l'intervalle d'alarme,
- un module secondaire de vannes de sécurité (29), et
- un module de sécurité (31) configuré pour transmettre ledit signal de mise en sécurité d'une part au module secondaire de vannes pour isoler l'enceinte étanche et d'autre part au centre de surveillance (9), ledit signal de mise en sécurité correspondant audit signal d'alerte secondaire (33).

4. Système selon la revendication 3, **caractérisé en ce que** le module secondaire de mesure comporte :
- un premier pressostat (53) configuré pour déclencher le signal de mise en sécurité lorsque ladite seconde valeur courante de pression atteint une première borne secondaire de l'intervalle d'alarmes, et
- un second pressostat (55) configuré pour déclencher le signal de mise en sécurité lorsque ladite seconde valeur courante de pression atteint une seconde borne secondaire de l'intervalle d'alarmes.

5. Système selon la revendication 3 ou 4, **caractérisé en ce que** le module de sécurité (31) est un relais de sécurité configuré pour relayer le signal de mise en sécurité déclenché par l'un ou l'autre des premier et second pressostats (53, 55) d'une part au module secondaire de vannes de sécurité (29) afin d'isoler l'enceinte étanche et d'autre part au centre de surveillance (9).

6. Système selon l'une quelconque des revendications 3 à 5, **caractérisé en ce que** le module primaire de vannes de régulation (13) comporte une vanne primaire d'extraction (23) destinée à être reliée à une ligne fluidique d'extraction (19) et une vanne primaire de soufflage (21) destinée à être reliée à une ligne fluidique de soufflage (17), et **en ce que** le module secondaire de vannes de sécurité (29) comporte une vanne secondaire d'extraction (37) destinée à être reliée en série avec la vanne primaire d'extraction (23), et une vanne secondaire de soufflage (35) destinée à être reliée en série avec la vanne primaire de soufflage (21).

7. Système selon la revendication 6, **caractérisé en ce que** le module secondaire de vannes de sécurité (29) comporte en outre une vanne spécifique (65) d'arrivée de gaz ou de vide destinée à être reliée à une ligne fluidique annexe d'arrivée de gaz ou de vide.

8. Système selon la revendication 6 ou 7, **caractérisé en ce que** chacune des vannes primaires d'extraction et de soufflage comporte une ligne fluidique de dérivation (83, 101) permettant en cas de panne, de court-circuiter l'une ou l'autre desdites vannes primaires.

9. Système selon la revendication 6, **caractérisé en ce qu'**il *comporte* des vannes manuelles en amont et en aval de chacune des vannes primaires et secondaires d'extraction et de soufflage.

10. Système selon l'une quelconque des revendications 3 à 9, **caractérisé en ce qu'**il comporte une clarinette de mesure (35) comprenant les modules primaire et secondaire de mesure (11, 27) ainsi qu'une prise de pression de test d'étanchéité (57) et une connexion double obturation (59).

11. Système selon l'une quelconque des revendications précédentes, **caractérisé en ce que** les bornes primaires de l'intervalle de dégradation sont contenues dans l'intervalle d'alarme.

12. Système selon l'une quelconque des revendications précédentes, **caractérisé en ce que** les bornes primaires sont d'environ -20daPa et -70daPa, et **en ce que** les bornes secondaires sont d'environ -10daPa et -80daPa.

13. Système selon l'une quelconque des revendications précédentes, **caractérisé en ce qu'**il comporte une soupape hydraulique de sécurité (41) ultime.

14. Enceinte étanche de type boîte à gant ou enceinte de confinement comprenant le système de contrôle selon l'une quelconque des revendications précédentes.

15. L'enceinte étanche selon la revendication 14, **caractérisée en ce que** ladite enceinte étanche est une boîte à gants ou une enceinte de confinement.

## Patentansprüche

1. Drucksteuerungssystem für einen abgedichteten Behälter (7) vom Typ Handschuhkasten oder Sicherheitsbehälter, enthaltend einen primären Steuerkreis (3), der dazu ausgelegt ist, um einen aktuellen Druckwert des abgedichteten Behälters (7) in einem Betriebsdruckbereich aufrechtzuerhalten, wobei der primäre Steuerkreis (3) ferner dazu ausgelegt ist, um den abgedichteten Behälter (7) zu isolieren und ein primäres Warnsignal zu übertragen, falls der aktuelle Druckwert den einen oder anderen der primären Grenzwerte eines Druckabbaubereichs erreicht,
**dadurch gekennzeichnet, dass**
das System ferner eine sekundären Absicherungskreis (5) enthält, der vom primären Kreis unabhängig und davon verschieden ist, wobei der sekundäre Absicherungskreis (5) dazu ausgelegt ist, um den abgedichteten Behälter (7) zu isolieren und ein sekundäres Warnsignal zu übertragen, wenn der Druck des abgedichteten Behälters den einen oder anderen der sekundären Grenzwerte eines Alarmbereichs erreicht.

2. System nach Anspruch 1,
**dadurch gekennzeichnet, dass**
der primäre Steuerkreis (3) eine programmierte Logikschaltung ist und der sekundäre Absicherungskreis (5) eine verdrahtete Logikschaltung ist.

3. System nach Anspruch 1 oder 2,
**dadurch gekennzeichnet, dass**
der primäre Steuerkreis (3) enthält:
- ein primäres Messmodul (11), das dazu ausgelegt ist, um einen ersten aktuellen Druckwert des abgedichteten Behälters (7) zu messen,
- ein primäres Steuerventilmodul (13), und
- einen Steuerungsautomaten (15), der dazu ausgelegt ist, um das primäre Regelmodul (23) so zu steuern, dass der erste aktuelle Druckwert innerhalb des Betriebsbereichs bleibt, wobei der Steuerungsautomat (15) ferner dazu ausgelegt ist, um das Isolieren des abgedichteten Behälters zu steuern und das primäre Warnsignal (25) an eine Überwachungszentrale (9) zu übertragen, falls der erste aktuelle Druckwert den einen oder anderen der primären Grenzwerte des Druckabbaubereichs erreicht, und dass
der sekundäre Absicherungskreis (5) enthält:
- ein sekundäres Messmodul (27), das dazu ausgelegt ist, um einen zweiten aktuellen Druckwert des abgedichteten Behälters zu messen und ein Absicherungssignal auszulösen, wenn der zweite Druckwert den einen oder anderen der sekundären Grenzwerte des Alarmbereichs erreicht,
- ein sekundäres Sicherheitsventilmodul (29) und
- ein Sicherheitsmodul (31), das dazu ausgelegt ist, um das Absicherungssignal einerseits an das sekundäre Ventilmodul zum Isolieren des abgedichteten Behälters und andererseits an die Überwachungszentrale (9) zu übertragen, wobei das Absicherungssignal dem sekundären Warnsignal (33) entspricht.

4. System nach Anspruch 3,
**dadurch gekennzeichnet, dass**
das sekundäre Messmodul enthält:
- einen ersten Druckschalter (53), der dazu ausgelegt ist, um das Absicherungssignal auszulösen, wenn der zweite aktuelle Druckwert einen ersten sekundären Grenzwert des Alarmbereichs erreicht, und
- einen zweiten Druckschalter (55), der dazu ausgelegt ist, um das Absicherungssignal auszulösen, wenn der zweite aktuelle Druckwert einen zweiten sekundären Grenzwert des Alarmbereichs erreicht.

5. System nach Anspruch 3 oder 4,
**dadurch gekennzeichnet, dass**
das Sicherheitsmodul (31) ein Sicherheitsrelais ist, das dazu ausgelegt ist, um das Absicherungssignal, das durch den einen oder anderen aus erstem und zweitem Druckschalter (53, 55) ausgelöst wird, einerseits an das sekundäre Sicherheitsventilmodul (29) zum Isolieren des abgedichteten Behälters und anderseits an die Überwachungszentrale (9) weiterzuleiten.

6. System nach einem der Ansprüche 3 bis 5,
**dadurch gekennzeichnet, dass**
das primäre Regelventilmodul (13) ein primäres Ablassventil (23), das mit einer Ablassströmungsleitung (19) verbunden werden soll, und ein primäres Einblasventil (21) enthält, das mit einer Einblasströmungsleitung (17) verbunden werden soll, und dass
das sekundäre Sicherheitsventilmodul (29) ein sekundäres Ablassventil (37), das in Reihe mit dem primären Ablassventil (23) verbunden werden soll, und ein sekundäres Einblasventil (35) enthält, das in Reihe mit dem primären Einblasventil (21) verbunden werden soll.

7. System nach Anspruch 6,
**dadurch gekennzeichnet, dass**
das sekundäre Sicherheitsventilmodul (29) ferner ein spezifisches Gas- oder Vakuumeinlassventil (65) enthält, das mit einer zusätzlichen Gas- oder Vakuumeinlassströmungsleitung verbunden werden soll.

8. System nach Anspruch 6 oder 7,
**dadurch gekennzeichnet, dass**
jedes der primären Ablass- und Einblasventile eine Bypassströmungsleitung (83, 101) enthält, mit dem das eine oder andere der primären Ventile im Fehlerfall kurzgeschlossen werden kann.

9. System nach Anspruch 6,
**dadurch gekennzeichnet, dass**
es manuelle Ventile stromaufwärts und stromabwärts von jedem der primären und sekundären Ablass- und Einblasventile enthält.

10. System nach einem der Ansprüche 3 bis 9,
**dadurch gekennzeichnet, dass**
es eine Messanordnung (35) enthält, die das primäre und das sekundäre Messmodul (11, 27) enthält, sowie einen Dichtheitsprüfdruckanschluss (57) und einen Doppelabsperranschluss (59).

11. System nach einem der vorangehenden Ansprüche,
**dadurch gekennzeichnet, dass**
die primären Grenzwerte des Druckabbaubereichs in dem Alarmbereich enthalten sind.

12. System nach einem der vorangehenden Ansprüche,
**dadurch gekennzeichnet, dass**
die primären Grenzwerte etwa -20daPa und -70daPa betragen und dass die sekundären Grenzwerte etwa -10daPa und -80daPa betragen.

13. System nach einem der vorangehenden Ansprüche,
**dadurch gekennzeichnet, dass**
es ein äußerstes hydraulisches Sicherheitsventil (41) enthält.

14. Abgedichteter Behälter vom Typ Handschuhkasten oder Sicherheitsbehälter mit dem Steuerungssystem nach einem der vorangehenden Ansprüche.

15. Abgedichteter Behälter nach Anspruch 14,
**dadurch gekennzeichnet, dass**
der abgedichtete Behälter ein Handschuhkasten oder ein Sicherheitsbehälter ist.

## Claims

1. A system for controlling the pressure of a sealed chamber (7) of the glove box or containment chamber type, comprising a driving primary circuit (3) configured to maintain a current pressure value of the sealed chamber (7) within an operational pressure interval, said driving primary circuit (3) being further configured to insulate the sealed chamber (7) and to transmit a primary alert signal in case where the current pressure value reaches either of the primary bounds of a degradation interval,
**characterised in that** said system further comprises a safety secondary circuit (5) independent of and dissimilar to said primary circuit, said safety secondary circuit (5) being configured to insulate the sealed chamber (7) and to transmit a secondary alert signal when the pressure of the sealed chamber reaches either of the secondary bounds of an alarm interval.

2. The system according to claim 1, **characterised in that** the driving primary circuit (3) is a programmed logic circuit and the safety secondary circuit (5) is a wired logic circuit.

3. The system according to claim 1 or 2, **characterised in that** said driving primary circuit (3) includes:
- a measurement primary module (11) configured to measure a first current pressure value of the sealed chamber (7),
- a primary module of regulating valves (13), and
- a driving automatic machine (15) configured to drive the primary module of regulation (23) such that said first current pressure value remains included within the operational interval, said driving automatic machine (15) being further configured to control insulation of the sealed chamber and to transmit said primary alert signal (25) to a monitoring centre (9) in case where said first current pressure value reaches either of the primary bounds of the degradation interval, and
**in that** said safety secondary circuit (5) includes:
- a measurement secondary module (27) configured to measure a second current pressure value of the sealed chamber and to trigger a safety signal when said second pressure value reaches either of the secondary bounds of the alarm interval,
- a secondary module of safety valves (29), and
- a safety module (31) configured to transmit said safety signal on the one hand to the secondary module of valves to insulate the sealed chamber and on the other hand to the monitoring centre (9), said safety signal corresponding to said secondary alert signal (33).

4. The system according to claim 3, **characterised in that** the measurement secondary module includes:
- a first pressure switch (53) configured to trigger the safety signal when said second current pressure value reaches a first secondary bound of the alarm interval, and
- a second pressure switch (55) configured to trigger the safety signal when said second current pressure value reaches a second secondary bound of the alarm interval.

5. The system according to claim 3 or 4, **characterised in that** the safety module (31) is a safety relay configured to relay the safety signal triggered by either of the first and second pressure switches (53, 55) on the one hand to the secondary module of safety valves (29) in order to insulate the sealed chamber and on the other hand to the monitoring centre (9).

6. The system according to any of claims 3 to 5, **characterised in that** the primary module of regulating valves (13) includes an extraction primary valve (23) for being connected to an extraction fluid line (19) and a blowing primary valve (21) for being connected to a blowing fluid line (17), and **in that** the secondary module of safety valves (29) includes an extraction secondary valve (37) for being connected in series with the extraction primary valve (23), and a blowing secondary valve (35) for being connected in series with the blowing primary valve (21).

7. The system according to claim 6, **characterised in that** the secondary module of safety valves (29) further includes a specific gas or vacuum inlet valve (65) for being connected to an accessory gas or vacuum inlet fluid line.

8. The system according to claim 6 or 7, **characterised in that** each of the extraction and blowing primary valves includes a shunt fluid line (83, 101) enabling in case of breakdown, either of said primary valves to be short-circuited.

9. The system according to claim 6, **characterised in that** it includes manual valves upstream and downstream of each of the extraction and blowing primary and secondary valves.

10. The system according to any of claims 3 to 9, **characterised in that** it includes a measuring manifold (35) comprising the measurement primary and secondary modules (11, 27) as well as a sealing test pressure tap (57) and a dual plug connection (59).

11. The system according to any of the preceding claims, **characterised in that** the primary bounds of the degradation interval are contained in the alarm interval.

12. The system according to any of the preceding claims, **characterised in that** the primary bounds are about -20daPa and -70daPa, and **in that** the secondary bounds are about -10daPa and -80daPa.

13. The system according to any of the preceding claims, **characterised in that** it includes an ultimate safety hydraulic valve (41).

14. A glove box or containment chamber type sealed chamber comprising the control system according to any of the preceding claims.

15. The sealed chamber according to claim 14, **characterised in that** said sealed chamber is a glove box or a containment chamber.
